# EUROPEAN PATENT APPLICATION

(11) **EP 4 439 825 A2**
(43) Date of publication of application: **02.10.2024**
(21) Application number: 23219723.6
(22) Date of filing: 22.12.2023
(51) Int. Cl.: H01M 50/213, H01M 50/249, H01M 50/262, H01M 50/503, H01M 50/507, H01M 50/509

(54) **BATTERY PACK**

(30) Priority: 26.03.2023 KR 20230039354; 14.04.2023 KR 20230049401
(71) Applicant: Samsung SDI Co., Ltd., Yongin-si, Gyeonggi-do 17084 (KR)
(72) Inventor: PARK, Sanghun, 17084 Yongin-si (KR)
(74) Representative: Marks & Clerk LLP

(57) **Abstract**

A battery pack includes: a case including a plurality of engaging grooves; a plurality of battery cells in the case; a plurality of cell bus bars electrically connecting the plurality of battery cells to each other; and one or more battery pack bus bars including a plurality of engaging protrusions to be inserted into the plurality of engaging grooves of the case. The plurality of engaging protrusions are to be attached to or detached from the case by being inserted into or withdrawn from the engaging grooves.

## Description

### BACKGROUND

### 1. Field

Aspects of one or more embodiments of the present disclosure relate to a battery pack.

### 2. Description of the Related Art

A secondary battery refers to a chargeable and dischargeable battery, unlike a primary battery that is not chargeable. Secondary batteries are used as energy sources for mobile devices, electric vehicles, hybrid vehicles, electric bicycles, uninterruptible power supplies, and/or the like. Secondary batteries are used in the form of a single battery, or in the form of a pack in which multiple battery cells are connected and grouped together into one unit, according to a type of an applied external device.

Small mobile devices, such as mobile phones, may operate for a certain amount of time based on the output and capacity of a single battery, whereas large-size mobile devices, such as laptop computers, or devices requiring long-term driving and high-power operations, such as electric vehicles, hybrid vehicles, and the like, may consume a lot of power. Thus, a secondary battery of a pack type including a plurality of batteries may be used due to output and capacity issues when using a single battery, and output voltage or output current may be increased with the number of built-in batteries that are included in the pack.

In addition, battery packs including a plurality of batteries may be modularized by being connected in series and/or parallel, and in this case, a case may be used to protect the battery pack. As such, the plurality of battery packs that are connected in series and/or parallel may be used for high-voltage and high-current applications, and may be desired to have high durability against external impacts. As such, it may be desired to fix a position of a bus bar electrically connecting the plurality of batteries to prevent or substantially prevent the bus bar from moving in the battery pack in the case of external impacts.

The above information disclosed in this Background section is for enhancement of understanding of the background of the present disclosure, and therefore, it may contain information that does not constitute prior art.

### SUMMARY

In a comparative example, in order to prevent the bus bar from changing its position, a rib corresponding to the shape of the bus bar is formed in the case to avoid direct application of external impacts to the bus bar, and fix the bus bar to the case with a bolt, a screw, and/or the like.

However, when a plurality of battery packs are used to configure a higher-capacity battery module, a space between the battery packs may be reduced, and thus, it may be difficult to use a rib, a bolt, and a screw engagement structure for fixing the bus bar.

One or more embodiments of the present disclosure are directed to a battery pack including a bus bar that may be easily engageable with a case even when a plurality of battery packs are densely packed.

However, the present disclosure is not limited to the aspects and features described above, and additional aspects and features will be set forth, in part, in the description that follows, and in part, will be apparent from the description, or may be learned by practicing one or more of the presented embodiments of the present disclosure.

According to one or more embodiments of the present disclosure, a battery pack includes: a case including a plurality of engaging grooves; a plurality of battery cells in the case; a plurality of cell bus bars electrically connecting the plurality of battery cells to each other; and one or more battery pack bus bars including a plurality of engaging protrusions configured to be inserted into the plurality of engaging grooves of the case. The plurality of engaging protrusions are configured to be attached to or detached from the case by being inserted into or withdrawn from the engaging grooves.

In an embodiment, each of the plurality of engaging protrusions may protrude in a direction crossing a longitudinal direction of the battery pack bus bar toward the case.

In an embodiment, each of the plurality of engaging protrusions may be configured to be inserted between two corresponding adjacent battery cells of the plurality of battery cells.

In an embodiment, each of the plurality of engaging protrusions may include: a bent part bent toward the case from the battery pack bus bar; and a projecting part extending from the bent part, and configured to be inserted into a corresponding engaging groove from among the plurality of engaging grooves.

In an embodiment, a width of the projecting part may be greater than a width of the bent part.

In an embodiment, a width of the corresponding engaging groove may be greater than or equal to a width of the projecting part.

In an embodiment, each of the one or more battery pack bus bars may include: a contacting portion configured to contact at least one of the plurality of cell bus bars; and an engaging portion extending in parallel to the contacting portion, and including the plurality of engaging protrusions.

In an embodiment, the plurality of engaging protrusions may be located along a longitudinal direction of the engaging portion, and the plurality of engaging grooves may have the same number as that of the plurality of engaging protrusions.

In an embodiment, the plurality of engaging protrusions may be located at an upper end of the engaging portion and a lower end of the engaging portion.

In an embodiment, the plurality of engaging protrusions located at the lower end of the engaging portion may be symmetrically located with respect to the plurality of engaging protrusions located at the upper end of the engaging portion around the engaging portion.

In an embodiment, the plurality of engaging protrusions located at the lower end of the engaging portion may be located between two adjacent engaging protrusions from among the plurality of engaging protrusions located at the upper end of the engaging portion.

In an embodiment, the contacting portion may be configured to contact a cell bus bar located at an edge of the case from among the plurality of cell bus bars.

In an embodiment, the contacting portion may have a bent shape including: a part configured to contact a bottom surface or a top surface of the case; and another part configured to contact a side surface adjacent to the bottom surface or the top surface of the case.

In an embodiment, the contacting portion may include at least a portion configured to contact the at least one of the plurality of cell bus bars.

In an embodiment, each of the one or more battery pack bus bars may further include: an extending portion extending upwardly from an end of the contacting portion; and a connecting portion extending upwardly from an end of the engaging portion opposite to the extending portion, and configured to be connected to a controller.

In an embodiment, at least one of the plurality of engaging protrusions may be located at an upper end of the extending portion.

In an embodiment, the contacting portion and the engaging portion may extend from opposite ends in a longitudinal direction of the extending portion, and may be spaced apart from each other in a height direction. At least a part of the at least one of the plurality of cell bus bars contacting the contacting portion may be located in a region between the contacting portion and the engaging portion.

In an embodiment, the case may include: a first case; and a second case on the first case, the second case being configured to be attached to or detached from the first case, and including one or more stoppers on a side surface of the second case configured to receive the extending portion inserted therebetween.

In an embodiment, the one or more stoppers may include a pair of stoppers located at opposite sides of the extending portion in a width direction, and the extending portion may include a concave part adjacent to the pair of stoppers that may be concaved inwardly.

In an embodiment, the extending portion may include: a seating part located between a pair of the one or more stoppers; and a connecting part extending from an end of the seating part and connected to the controller.

In an embodiment, the one or more battery pack bus bars may be configured to slide in a direction parallel to a longitudinal direction of the case in a state in which the plurality of engaging protrusions are inserted into the plurality of engaging grooves to closely contact a side surface of the case.

In an embodiment, the one or more battery pack bus bars may be located on a side surface corresponding to a long side of the case.

In an embodiment, the one or more battery pack bus bars may include a pair of battery pack bus bars; one of the pair of battery pack bus bars may be configured to interconnect negative tabs of the plurality of battery cells to each other; and the other of the pair of battery pack bus bars may be configured to interconnect positive tabs of the plurality of battery cells to each other.

At least some of the above and other features of the invention are set out in the claims.

### BRIEF DESCRIPTION OF THE DRAWINGS

The above and other aspects and features of the present disclosure will be more clearly understood from the following detailed description of the illustrative, nonlimiting embodiments with reference to the accompanying drawings, in which:
FIG. 1 shows a battery pack assembly according to an embodiment;
FIG. 2 shows a battery pack according to an embodiment;
FIG. 3 shows a case according to an embodiment;
FIGS. 4-7 show a battery pack bus bar according to one or more embodiments;
FIGS. 8-11 show a state of a battery pack bus bar inserted into a case, according to one or more embodiments;
FIG. 12 is an enlarged view of a battery pack bus bar according to an embodiment; and
FIGS. 13-15 show a state of a battery pack bus bar inserted into a case, according to an embodiment.

### DETAILED DESCRIPTION

Hereinafter, embodiments will be described in more detail with reference to the accompanying drawings, in which like reference numbers refer to like elements throughout. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described. Unless otherwise noted, like reference numerals denote like elements throughout the attached drawings and the written description, and thus, redundant description thereof may not be repeated.

When a certain embodiment may be implemented differently, a specific process order may be different from the described order. For example, two consecutively described processes may be performed at the same or substantially at the same time, or may be performed in an order opposite to the described order.

In the drawings, the relative sizes, thicknesses, and ratios of elements, layers, and regions may be exaggerated and/or simplified for clarity. Spatially relative terms, such as "beneath," "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly.

In the figures, the x-axis, the y-axis, and the z-axis are not limited to three axes of the rectangular coordinate system, and may be interpreted in a broader sense. For example, the x-axis, the y-axis, and the z-axis may be perpendicular to or substantially perpendicular to one another, or may represent different directions from each other that are not perpendicular to one another.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the scope of the present disclosure.

It will be understood that when an element or layer is referred to as being "on," "connected to," or "coupled to" another element or layer, it can be directly on, connected to, or coupled to the other element or layer, or one or more intervening elements or layers may be present. Similarly, when a layer, an area, or an element is referred to as being "electrically connected" to another layer, area, or element, it may be directly electrically connected to the other layer, area, or element, and/or may be indirectly electrically connected with one or more intervening layers, areas, or elements therebetween. In addition, it will also be understood that when an element or layer is referred to as being "between" two elements or layers, it can be the only element or layer between the two elements or layers, or one or more intervening elements or layers may also be present.

The terminology used herein is for the purpose of describing particular embodiments and is not intended to be limiting of the present disclosure. As used herein, the singular forms "a" and "an" are intended to include the plural forms as well, unless the context clearly indicates otherwise. It will be further understood that the terms "comprises," "comprising," "includes," "including," "has," "have," and "having," when used in this specification, specify the presence of the stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. For example, the expression "A and/or B" denotes A, B, or A and B. Expressions such as "at least one of," when preceding a list of elements, modify the entire list of elements and do not modify the individual elements of the list. For example, the expression "at least one of a, b, or c," "at least one of a, b, and c," and "at least one selected from the group consisting of a, b, and c" indicates only a, only b, only c, both a and b, both a and c, both b and c, all of a, b, and c, or variations thereof.

As used herein, the terms "substantially," "about," and similar terms are used as terms of approximation and not as terms of degree, and are intended to account for the inherent variations in measured or calculated values that would be recognized by those of ordinary skill in the art. Further, the use of "may" when describing embodiments of the present disclosure refers to "one or more embodiments of the present disclosure." As used herein, the terms "use," "using," and "used" may be considered synonymous with the terms "utilize," "utilizing," and "utilized," respectively.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

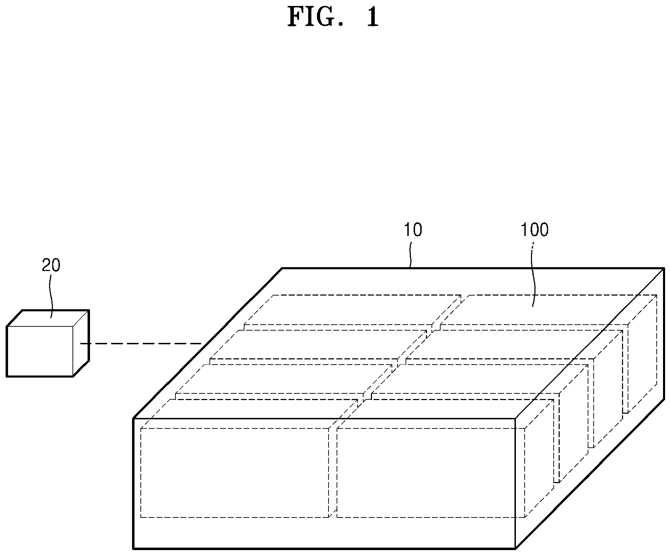

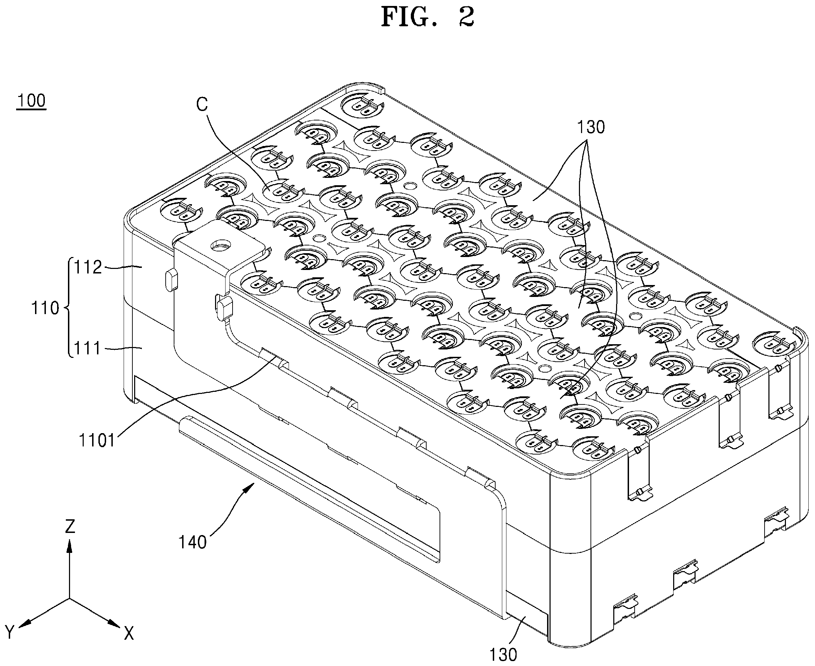

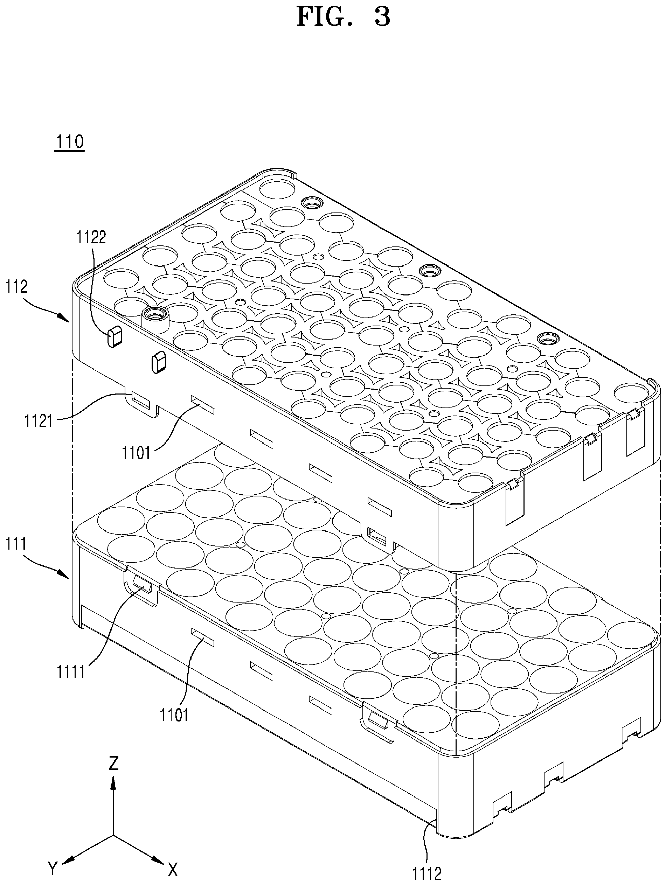

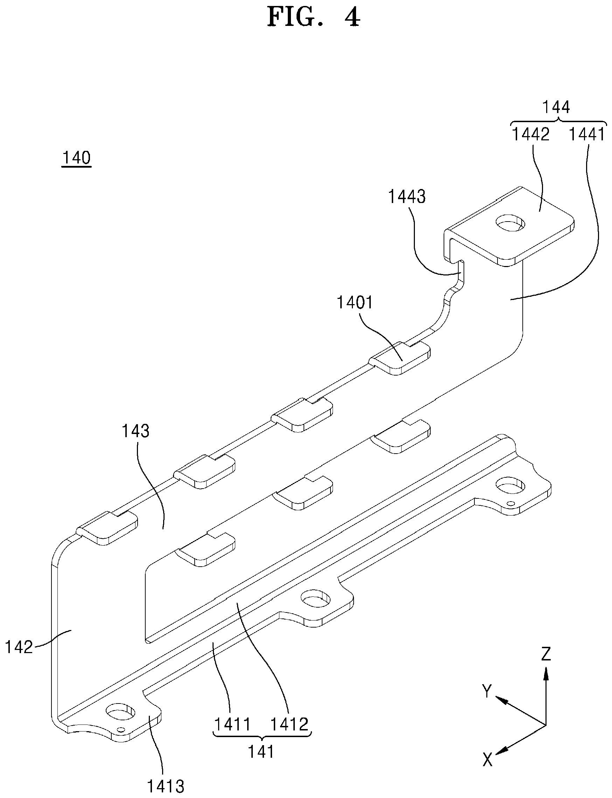

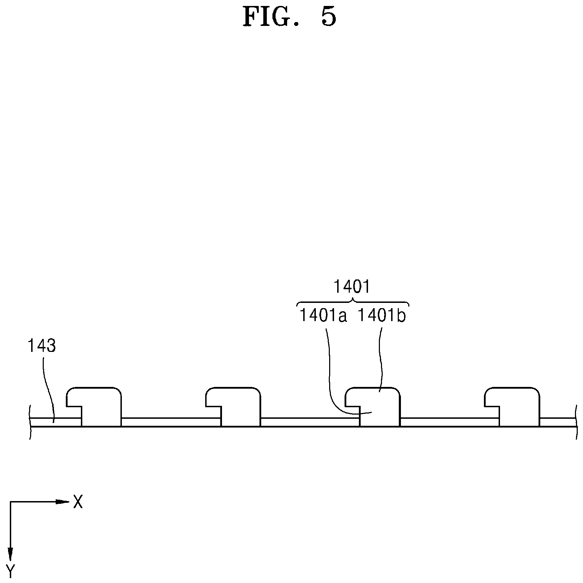

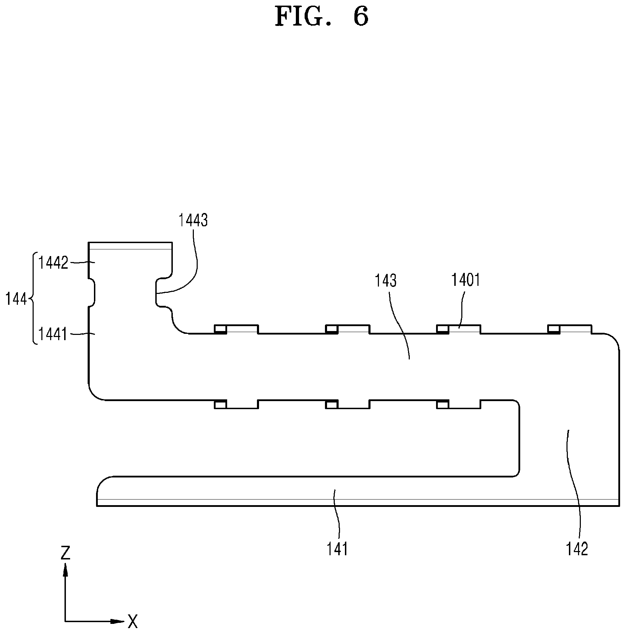

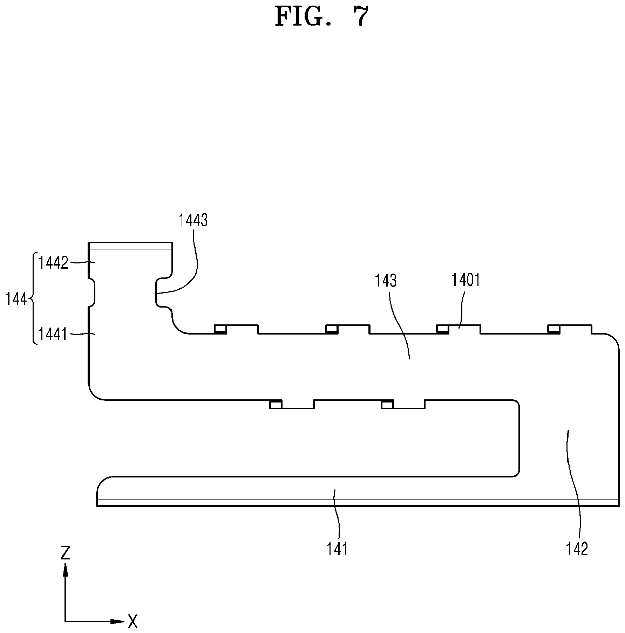

FIG. 1 shows a battery pack assembly 10 according to an embodiment. FIG. 2 shows a battery pack 100 according to an embodiment. FIG. 3 shows a case 110 according to an embodiment. FIGS. 4 through 7 show a battery pack bus bar 140 according to one or more embodiments. For example, FIGS. 6 and 7 show the battery pack bus bar 140 that is viewed from the outside according to different embodiments.

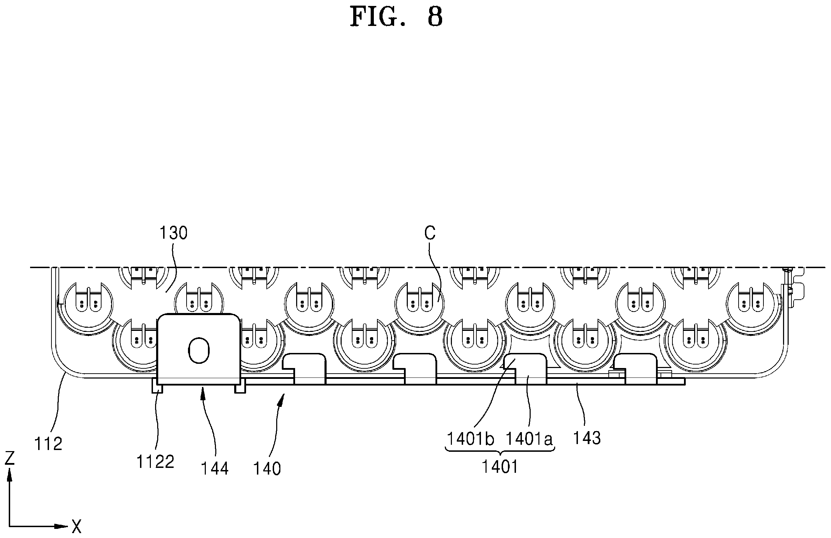

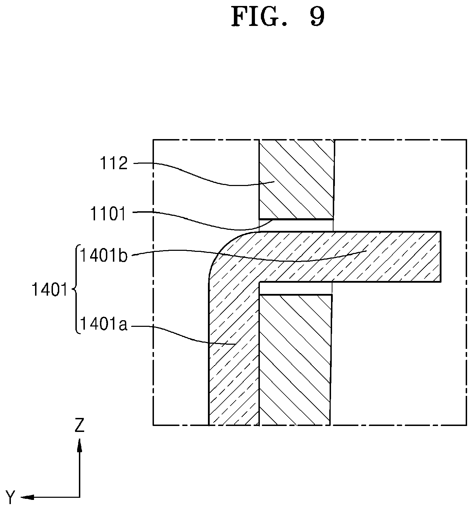

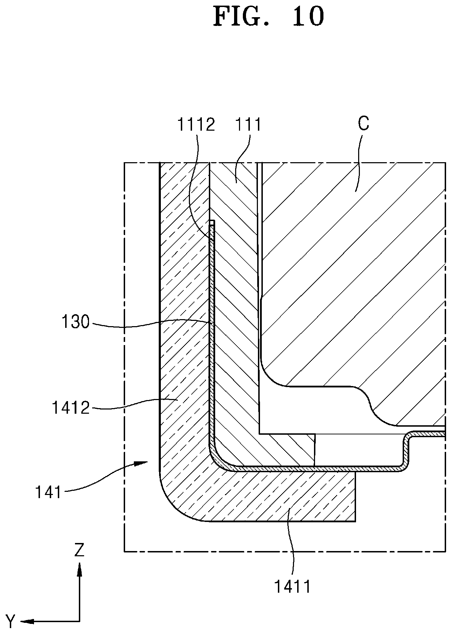

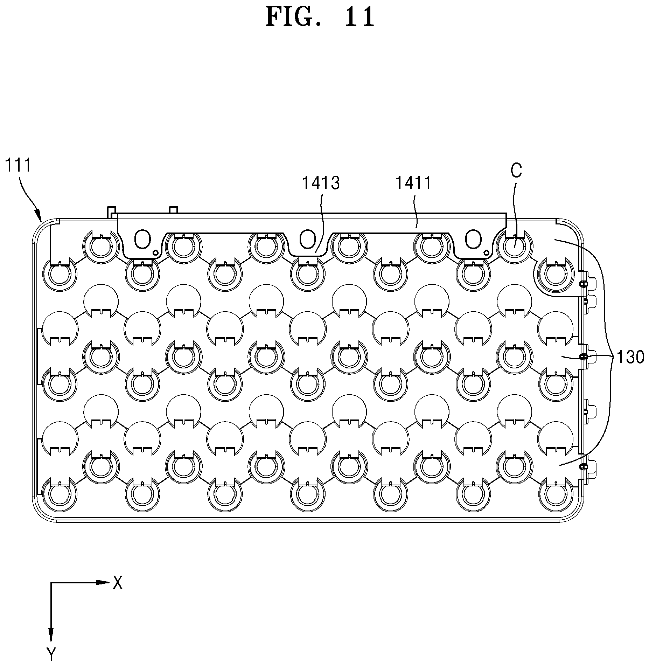

FIGS. 8 through 11 show a state of the battery pack bus bar 140 inserted into the case 110 according to one or more embodiments. For example, FIG. 8 is a view showing the battery pack bus bar 140 inserted into the case 110 so as to be visible from the outside, and FIG. 9 is a longitudinal-sectional view of a state of the battery pack bus bar 140 including an engaging protrusion 1401 being inserted into an engaging groove 1101. FIG. 10 is a longitudinal-sectional view of a contact state between a contact portion 141 of the battery pack bus bar 140 and a bus bar (e.g., a cell bus bar) 130, and FIG. 11 shows a bottom surface of the case 110 to which the battery pack bus bar 140 is engaged.

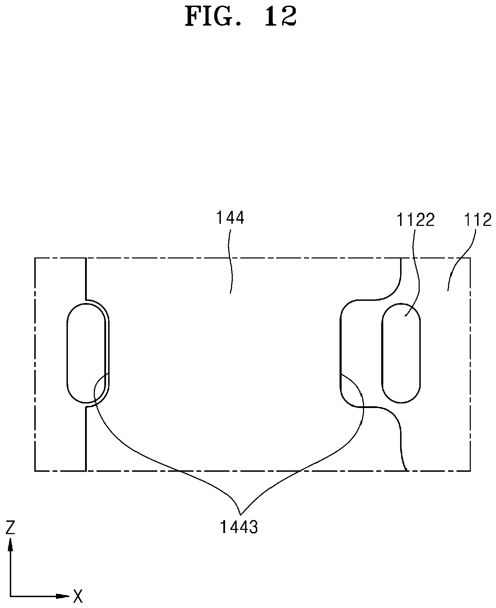

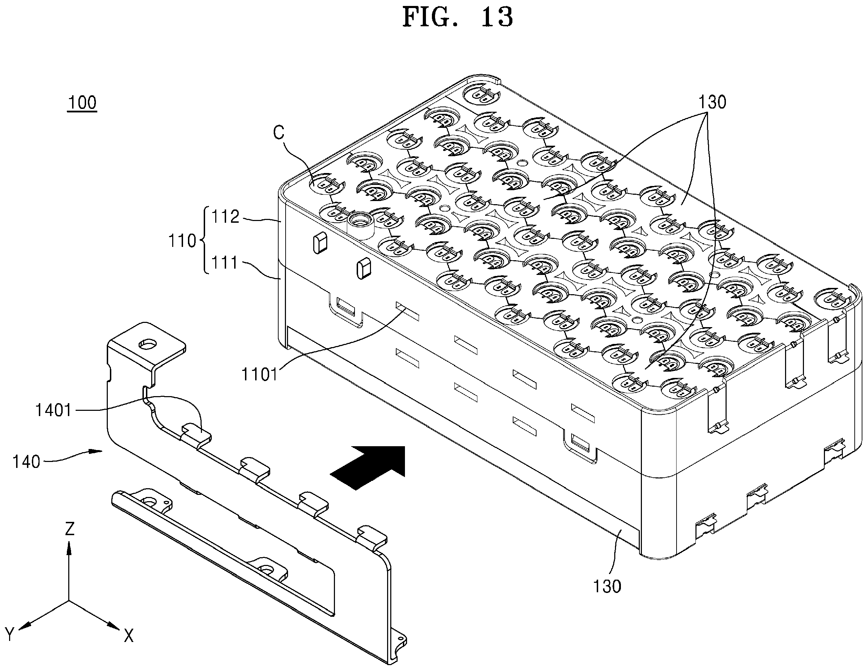

FIG. 12 is an enlarged view of the battery pack bus bar 140 according to an embodiment. FIGS. 13 through 15 show a state of the battery pack bus bar 140 inserted into the case 110, according to an embodiment, for example, such as being mounted in the case 110.

Referring to FIG. 1, according to an embodiment, the battery pack 100 may be included in the battery pack assembly 10. A plurality of the battery packs 100 may be connected in series and/or parallel to form the battery pack assembly 10, thereby generating a high output. As will be described in more detail below, each of the plurality of battery packs 100 may be covered by the case 110, and the plurality of battery packs 100 may be electrically connected to each other through the battery pack bus bar 140. The plurality of battery packs 100 may be spaced apart from each other by a suitable space (e.g., a certain or predetermined space), and may be disposed inside a housing of the battery pack assembly 10.

The plurality of battery packs 100 and the battery pack assembly 10 including the same may be controlled by a controller 20. The controller 20 may be connected to a protection circuit (e.g., a control circuit) provided in each battery pack 100, and may control current and voltage states of the battery pack 100 to prevent or substantially prevent overcharge, overdischarge, overcurrent, and a short circuit of the battery pack 100 and the battery pack assembly 10.

While eight battery packs 100 are shown in FIG. 1, the number of battery packs 100 included in the battery pack assembly 10 is not specially limited thereto. An appropriate number of battery packs 100 may be provided based on a desired output and voltage and desired current states of the battery pack assembly 10. In an embodiment, two or more battery packs 100 may be provided.

Referring to FIG. 2, according to an embodiment, the battery pack 100 includes a plurality of battery cells C. The battery cell C may be a cylindrical secondary battery in which a pair of pole plates and a separator disposed therebetween are rolled. In an embodiment, the pair of pole plates may include, as a positive plate and a negative plate, a coated portion coated with an active material on a base and an uncoated portion not coated with an active material. The negative plate may include, as an active material, a negative active material including a carbon material, such as crystalline carbon, amorphous carbon, a carbon composite, carbon fiber, and/or the like, and a lithium metal or a lithium alloy. The positive plate may include, as an active material, a positive active material including lithium, such as LiCoO₂, LiNiO₂, LiMnO₂, LiMn₂O₄, LiNi_{1-x-y}CoₓM_{y}O₂, and/or the like. The separator may be disposed between the pair of pole plates to insulate them, and to exchange lithium ions between the pair of pole plates.

The battery cell C may include a housing disposed to surround (e.g., around a periphery of) the pair of pole plates and the separator, and a positive tab and a negative tab disposed at opposite ends in a longitudinal direction of the housing.

The number of battery cells C is not specially limited, and a plurality of battery cells C may be appropriately provided according to desired specifications of the battery pack 100 and the battery pack assembly 10. Some of the plurality of battery cells C may be disposed with positive tabs oriented upward (e.g., in the Z-direction), and some others of the plurality of battery cells C may be disposed with negative tabs oriented upward. As another example, all of the plurality of battery cells C may be disposed with the positive tabs oriented upward or the negative tabs oriented upward.

The battery pack 100 according to an embodiment includes the case 110, the cell bus bar 130, and the battery pack bus bar 140.

As shown in FIGS. 2 and 3, the case 110 may hold and/or support other components of the battery pack 100, and may include an inner space in which the plurality of battery cells C is disposed. In an embodiment, the case 110 may have a rectangular parallelepiped shape with a long side extending in a suitable direction (e.g., the X-direction in FIG. 2), and may have a shape that is rounded with externally convex corners.

In an embodiment, the case 110 may include a first case 111 and a second case 112.

The first case 111 may form a lower part of the case 110, and may be disposed under the second case 112 to support the plurality of battery cells C therein together with the second case 112. As shown in FIG. 3, the first case 111 may include a plurality of cylindrical seating holes. The cylindrical seating hole may have a shape and a size corresponding to the battery cell C. In a state where the battery cell C is inserted into the seating hole of the first case 111, an electrode tab disposed on a bottom surface of the seating hole may be exposed to the outside of the first case 111, and the cell bus bar 130 described in more detail below may contact the exposed electrode tab of the battery cell C. Thus, the plurality of battery cells C may be electrically connected to each other.

In an embodiment, the first case 111 may include a locking protrusion 1111. As shown in FIG. 3, a plurality of locking protrusions 1111 may be disposed on a side surface of the first case 111. The locking protrusion 1111 may protrude outwardly from the side surface of the first case 111, and may be inserted into a locking groove 1121 of the second case 112. Thus, the second case 112 may be attachably/detachably coupled to the first case 111.

In an embodiment, a peripheral portion of the locking protrusion 1111 may be recessed inwardly to form a step with the side surface of the first case 111. A peripheral portion of the locking groove 1121 may be seated on the peripheral portion of the locking protrusion 1111.

In an embodiment, the locking protrusion 1111 may have a shape inclined downwardly and outwardly. Thus, when the second case 112 is pushed down toward the first case 111, the locking groove 1121 may be inserted into the locking protrusion 1111, while sliding along an inclined outer surface of the locking protrusion 1111.

In an embodiment, two locking protrusion 1111 may be disposed to be spaced apart from each other on a side surface corresponding to a long side of the first case 111.

In an embodiment, the first case 111 may include an engaging groove 1101. As shown in FIG. 3, one or more engaging grooves 1101 may be disposed at (e.g., in or on) the side surface of the first case 111. In an embodiment, a plurality of engaging grooves 1101 may be disposed to be spaced apart from each other at (e.g., in or on) the side surface corresponding to the long side of the first case 111. The engaging protrusion 1401 of the battery pack bus bar 140 described in more detail below may be inserted into and engaged with the engaging groove 1101.

In an embodiment, the engaging groove 1101 may be formed between the battery cells C. In an embodiment, as shown in FIG. 3, the engaging groove 1101 may be disposed between adjacent seating holes of the first case 111 in a suitable direction (e.g., the X-axis direction in FIG. 3). Thus, the engaging protrusion 1401 of the battery pack bus bar 140 described in more detail below may also be inserted into a space between the battery cells C to prevent or substantially prevent the battery pack bus bar 140 and the battery cell C from interfering with each other.

In an embodiment, the engaging groove 1101 may be disposed to be staggered with the locking protrusion 1111 and the locking groove 1121 as described in more detail below. As shown in FIG. 3, the engaging groove 1101 may be disposed to not overlap with the locking protrusion 1111 and the locking groove 1121 in a thickness direction (e.g., the Z-axis direction in FIG. 3), so as to not interfere with the battery pack bus bar 140 when the first case 111 and the second case 112 are coupled to each other.

In an embodiment, the first case 111 may include a seating groove 1112. As shown in FIG. 10, the seating groove 1112 may be formed at a side of the side surface of the first case 111, and any one of a plurality of the cell bus bars 130 may be seated therein. In an embodiment, the seating groove 1112 may have a depth corresponding to a thickness of the cell bus bar 130. Thus, the cell bus bar 130 in a state of being seated in the seating groove 1112 may be disposed to be flat or substantially flat, so as not to form a step with the side surface of the first case 111. As such, the cell bus bar 130 may be stably supported in the first case 111, and at the same time, the battery pack bus bar 140 may not protrude outwardly (e.g., in the Y-axis direction).

The second case 112 may form an upper part of the case 110, and may be disposed on the first case 111 to support the plurality of battery cells C therein together with the first case 111. As shown in FIG. 3, the second case 112 may include a plurality of cylindrical seating holes to correspond to the seating holes formed in the first case 111. In a state where the battery cell C is inserted into the seating hole of the second case 112, an electrode tab disposed on a top surface of the seating hole may be exposed to the outside of the second case 112, and the cell bus bar 130 described in more detail below may contact the exposed electrode tab of the battery cell C. Thus, the plurality of battery cells C may be electrically connected to each other.

In an embodiment, the second case 112 may include the locking groove 1121. As shown in FIG. 3, a plurality of the locking grooves 1121 may be disposed on a side surface of the second case 112. The locking groove 1121 may protrude outwardly from the side surface of the second case 112, and may be inserted into the locking protrusion 1111 of the first case 111. Thus, the first case 111 may be attachably/detachably coupled to the second case 112.

In an embodiment, the locking groove 1121 may extend downward from a lower end of an edge of the second case 112. The locking groove 1121 may be formed at a position corresponding to the locking protrusion 1111, and may be provided in the same number as that of the locking protrusion 1111. In an embodiment, two locking grooves 1121 may be disposed to be spaced apart from each other on a side surface corresponding to a long side of the second case 112.

In an embodiment, the second case 112 may include the engaging groove 1101. As shown in FIG. 3, one or more engaging grooves 1101 may be disposed at (e.g., in or on) the side surface of the second case 112. In an embodiment, a plurality of the engaging grooves 1101 may be disposed to be spaced apart from each other at (e.g., in or on) the side surface corresponding to the long side of the second case 112. The engaging protrusion 1401 of the battery pack bus bar 140 described in more detail below may be inserted into and fixed in the engaging groove 1101. The engaging groove 1101 formed in the second case 112 may have the same or substantially the same structure as that of the engaging groove 1101 formed in the first case 111 described above, and thus, redundant description may not be repeated.

In an embodiment, the engaging groove 1101 of the second case 112 may be positioned to correspond to the engaging groove 1101 of the first case 111. In an embodiment, as shown in FIG. 3, the engaging groove 1101 of the second case 112 may be disposed to overlap with the engaging groove 1101 of the first case 111 in a height direction (e.g., the Z-direction).

As such, because both the first case 111 and the second case 112 may include the engaging grooves 1101, the battery pack bus bar 140 may be stably coupled to the first case 111 and the second case 112 through the engaging protrusion 1401.

In an embodiment, the second case 112 may include a stopper 1122.

As shown in FIG. 3, a pair of stoppers 1122 may be disposed on a side surface of the second case 112 with which the battery pack bus bar 140 is engaged. The pair of stoppers 1122 are spaced apart from each other by a suitable space (e.g., a certain or predetermined space), and a connecting portion 144 described in more detail below may be disposed therebetween. As shown in FIG. 12, the connecting portion 144 may include concave parts 1443 formed to concave inwardly and to have a shape corresponding to the stoppers 1122. Thus, when the battery pack bus bar 140 slides for engagement with the case 110, the battery pack bus bar 140 may be supported to not move excessively, as the stoppers 1122 contact the concave parts 1443 of the battery pack bus bar 140. The stoppers 1122 may also provide a mounting criterion when the battery pack bus bar 140 is coupled to the case 110.

The cell bus bar 130 may be disposed at a side of the case 110 to electrically connect the plurality of battery cells C to one another. In an embodiment, as shown in FIG. 2, the plurality of cell bus bars 130 may be disposed on the top surface of the second case 112 to electrically connect the exposed electrode tabs on the top surfaces of the battery cells C to each other. As shown in FIG. 11, the plurality of cell bus bars 130 may be disposed on the bottom surface of the first case 111 to electrically connect the exposed electrode tabs on the bottom surfaces of the battery cells C to each other.

In an embodiment, the plurality of battery cells C contacting one of the cell bus bars 130 may contact the one cell bus bar 130 through electrode tabs having the same polarity as each other. In an embodiment, the plurality of battery cells C contacting one of the cell bus bars 130 may contact the one cell bus bar 130 with the negative tabs contacting the one cell bus bar 130 or with the positive tabs contacting the one cell bus bar 130. Thus, each cell bus bar 130 may serve as a negative bus bar interconnecting at least some of the negative tabs of the plurality of battery cells C to each other, or a positive bus bar interconnecting at least some of the positive tabs of the plurality of battery cells C to each other.

The battery pack bus bar 140 may be a conductive member disposed at a side of the battery pack 100, and may interconnect the cell bus bars 130 respectively included in the battery packs 100. In an embodiment, the battery pack bus bar 140 may be electrically connected to at least one of the plurality of cell bus bars 130, and may contact a battery pack bus bar 140 included in an adjacent battery pack 100, thereby connecting the battery packs in series or in parallel.

In an embodiment, the battery pack bus bar 140 includes the plurality of engaging protrusions 1401 inserted into the plurality of engaging grooves 1101 formed in the case 110, and one or more battery pack bus bars 140 are provided, such that the engaging protrusions 1401 are disposed to be attachable to or detachable from the case 110 by being inserted into or withdrawn from the engaging grooves 1101.

In an embodiment, a plurality of battery pack bus bars 140 may be provided. Although one battery pack bus bar 140 is illustrated as being disposed on the side surface of the case 110 in FIG. 2, the present disclosure is not limited thereto, and another one may be further disposed on the opposite side surface of the case 110, such that a total of two battery pack bus bars 140 may be provided in this example. In an embodiment, the pair of battery pack bus bars 140 may be disposed on a pair of side surfaces corresponding to long sides of the case 110, respectively.

In an embodiment, the plurality of battery pack bus bars 140 may have different polarities from each other. In an embodiment, one of the two battery pack bus bars 140 may be electrically connected to the cell bus bar 130 connecting the negative tabs of the plurality of battery cells C to each other, and the other battery pack bus bar 140 may be electrically connected to the cell bus bar 130 connecting the positive tabs of the plurality of battery cells C to each other.

In an embodiment, the battery pack bus bar 140 may contact the side surfaces of the first case 111 and the second case 112, respectively. As shown in FIG. 2, a part of the battery pack bus bar 140 may contact the side surface of the first case 111, and another part thereof may contact the side surface of the second case 112. As such, the battery pack bus bar 140 may be stably fixed to the case 110, and at the same time, may contact the cell bus bar 130 in a larger area, by contacting both the first case 111 and the second case 112.

In an embodiment, the battery pack bus bar 140 may contact the cell bus bar 130 located at an edge of the case 110 from among the plurality of cell bus bars 130. In an embodiment, as shown in FIG. 2, any one of the plurality of cell bus bars 130 may be disposed to be adjacent to the edge of the case 110 in a suitable direction (e.g., the Y-axis direction in FIG. 2). In more detail, at least a part of the corresponding cell bus bar 130 may be bent and disposed on the side surface of the second case 112. The battery pack bus bar 140 may be disposed to contact the cell bus bar 130 located at the edge of the case 110.

When the plurality of battery pack bus bars 140 are provided, another battery pack bus bar 140 may also contact the cell bus bar 130 located at the edge of the case 110 from among the plurality of cell bus bars 130.

In an embodiment, the battery pack bus bar 140 may include a contacting portion 141, an extending portion 142, an engaging portion 143, and a connecting portion 144.

The contacting portion 141 may be disposed at a side of the battery pack bus bar 140, and may contact the cell bus bar 130. In an embodiment, as shown in FIGS. 4 and 6, the contacting portion 141 may extend from a lower portion of the battery pack bus bar 140 in a longitudinal direction (e.g., the X-axis direction). The contacting portion 141 may be electrically connected to the cell bus bar 130 by contacting the cell bus bar 130 in a state where the battery pack bus bar 140 is coupled to the case 110.

In an embodiment, the contacting portion 141 may be disposed at the edge of the case 110. The contacting portion 141 may be disposed at the edge corresponding to the long side of the first case 111, and in more detail, may have a shape that is bent to surround (e.g., around a periphery of) the edge of the first case 111. Thus, a part of the contacting portion 141 may be disposed to correspond to the bottom surface of the case 110, and another part thereof may be disposed to correspond to the side surface of the case 110.

In an embodiment, the contacting portion 141 may contact the cell bus bar 130 located at the edge of the case 110 from among the plurality of cell bus bars 130. The contacting portion 141 may contact the cell bus bar 130 disposed at the edge of the first case 111 in a suitable direction (e.g., the Y-axis direction) from among the plurality of cell bus bars 130.

In an embodiment, the contacting portion 141 may include a seating part 1411 and a connecting part 1412.

The seating part 1411 may be disposed to be parallel to or substantially parallel to the bottom surface of the first case 111, and may contact a part of the cell bus bar 130. The seating part 1411 may be disposed to be adjacent to the edge of the first case 111, and may contact a part of the cell bus bar 130.

The connecting part 1412 may extend from the seating part 1411 to contact the cell bus bar 130. The connecting part 1412 may extend from an end of the seating part 1411 in a suitable direction (e.g., the Z-axis direction in FIG. 4) to contact the cell bus bar 130 seated in the seating groove 1112. As such, the seating part 1411 and the connecting part 1412 are disposed to surround (e.g., around a periphery of) the edge of the first case 111 to contact the cell bus bar 130, thereby, firmly supporting the cell bus bar 130 to the first case 111.

In an embodiment, the contacting portion 141 may further include a fixing part 1413. As shown in FIG. 4, a plurality of fixing parts 1413 may be disposed to be spaced apart from each other in a longitudinal direction of the contacting portion 141, or more specifically, the seating part 1411 of the contacting portion 141. The fixing part 1413 may protrude from the seating part 1411 to be disposed on the bottom surface of the first case 111, and may be coupled to the first case 111 through a bolt, welding, or the like. In an embodiment, as shown in FIG. 11, the fixing part 1413 may extend from the seating part 1411 to be disposed between two battery cells C that are adjacent to each other in a suitable direction (e.g., the X-axis direction).

The extending portion 142 may extend from a side of the contacting portion 141, and may connect the engaging portion 143 to the contacting portion 141. In an embodiment, as shown in FIGS. 4 and 6, the extending portion 142 may extend from an end (e.g., in the X-axis direction) of the contacting portion 141 in a height direction (e.g., the Z-axis direction). Thus, a region exposing the side surface of the case 110 may be formed between the contacting portion 141 and the engaging portion 143, and a plurality of the engaging protrusions 1401 may be disposed at a lower end of the engaging portion 143 to direct the corresponding region.

In an embodiment, the extending portion 142 may have a greater width than that of the contacting portion 141 or the engaging portion 143 in a suitable direction (the Z-axis direction).

In an embodiment, the extending portion 142 may contact the side surfaces of the first case 111 and the second case 112.

The engaging portion 143 may extend from a side of the extending portion 142, and may be engaged with the case 110. In an embodiment, as shown in FIGS. 4 and 6, the engaging portion 143 may extend in parallel to or substantially in parallel to the contacting portion 141, and may include the plurality of engaging protrusions 1401. The plurality of engaging protrusions 1401 may be disposed to be spaced apart from each other along an upper end and a lower end of the engaging portion 143. As the engaging protrusion 1401 is inserted into or withdrawn from the engaging groove 1101, the battery pack bus bar 140 may be attached to or detached from the case 110. The engaging protrusion 1401 may protrude from the engaging portion 143 toward the case 110 in a direction crossing (e.g., intersecting) the longitudinal direction of the battery pack bus bar 140.

In an embodiment, the engaging protrusion 1401 may be inserted between adjacent battery cells C. As shown in FIGS. 2 and 3, the engaging groove 1101 may be formed between the battery cells C that are adjacent to each other in a first direction (e.g., the X-axis direction). Thus, the engaging protrusion 1401 may also be inserted between the battery cells C that are adjacent to each other in the first direction (e.g., the X-axis direction). As shown in FIG. 8, the engaging protrusion 1401 is inserted into a room space between the adjacent battery cells C, thereby preventing or substantially preventing the engaging protrusion 1401 from interfering with the battery cells C, and removing the need for a separate additional room space in the case 110 for the engaging protrusion 1401.

In an embodiment, the engaging protrusion 1401 may extend from the engaging portion 143 toward the case 110. The engaging protrusion 1401 may extend toward the case 110 perpendicularly or substantially perpendicularly from the upper end and the lower end of the engaging portion 143. The engaging protrusion 1401 disposed at the upper end of the engaging portion 143 may be inserted into the engaging groove 1101 formed in the second case 112, and the engaging protrusion 1401 disposed at the lower end of the engaging portion 143 may be inserted into the engaging groove 1101 formed in the first case 111.

In an embodiment, the plurality of engaging protrusions 1401 disposed at the upper end and the lower end of the engaging portion 143 may be disposed to overlap with each other. In an embodiment, as shown in FIG. 6, the plurality of engaging protrusions 1401 disposed at the upper end and the lower end of the engaging portion 143 may be disposed symmetrically or substantially symmetrically with respect to the engaging portion 143.

In another embodiment, as shown in FIG. 7, the plurality of engaging protrusions 1401 disposed at the upper end and the lower end of the engaging portion 143 may be disposed to be staggered with one another, so as not to overlap with each other in the height direction. In other words, the plurality of engaging protrusions 1401 disposed at the lower end of the engaging portion 143 may be disposed between two adjacent engaging protrusions 1401 of the plurality of engaging protrusions 1401 disposed at the upper end of the engaging portion 143.

In an embodiment, the extending portion 142 may include the engaging protrusion 1401 at a side thereof. As shown in FIG. 6, the engaging protrusion 1401 may be disposed at the upper end of the extending portion 142 to stably support the battery pack bus bar 140 in the case 110 in the longitudinal direction.

In an embodiment, the engaging protrusion 1401 may include a bent part 1401a and a projecting part 1401b.

The bent part 1401a may extend from the engaging portion 143 toward the case 110. In an embodiment, the bent part 1401a may extend in a direction perpendicular to or substantially perpendicular to the engaging portion 143. In an embodiment, as shown in FIG. 9, at least a part of the bent part 1401a may overlap with the engaging groove 1101 when the engaging protrusion 1401 is inserted into the engaging groove 1101.

The projecting part 1401b may be disposed at an end of the bent part 1401a, and may have a greater width than that of the bent part 1401a. The projecting part 1401b may be inserted into an inner side of the case 110 in a state where the engaging protrusion 1401 is inserted into the engaging groove 1101 to support the battery pack bus bar 140 in the case 110. In more detail, the projecting part 1401b in a state of being inserted into the engaging groove 1101 may contact an inner surface of the case 110 adjacent to the engaging groove 1101. Thus, the battery pack bus bar 140 may be supported in a suitable direction (e.g., the Y-axis direction) with respect to the case 110.

While the projecting part 1401b inserted into the engaging groove 1101 of the second case 112 is shown in FIG. 8, the projecting part 1401b may also be inserted into the engaging groove 1101 of the first case 111 and be supported on the inner surface of the first case 111.

In an embodiment, the projecting part 1401b may have a width that is less than or equal to that of the engaging groove 1101. A thickness of the projecting part 1401b may be less than or equal to a height of the engaging groove 1101.

The connecting portion 144 may extend from a side of the engaging portion 143, and a part thereof may be disposed on the case 110. In an embodiment, as shown in FIG. 4, the connecting portion 144 may have a shape which extends from an end opposite to an end of the engaging portion 143 at which the extending portion 142 is disposed to a part thereof of which is bent toward the case 110. The connecting portion 144 may be fixed at a side of the case 110 and connected to a control module (e.g., a controller or a control circuit). The control module may be connected to the controller 20 of the battery pack assembly 10.

In an embodiment, the connecting portion 144 may include a seating part 1441 and a connecting part 1442.

The seating part 1441 may extend from an end of the engaging portion 143 in the height direction. In an embodiment, as shown in FIG. 4, the seating part 1441 may extend perpendicularly or substantially perpendicularly from the upper end of the engaging portion 143. The seating part 1441 may extend above a top surface of the second case 112.

The connecting part 1442 may extend from the seating part 1441 in a suitable direction to be disposed on the second case 112, and may be connected to the control module. In an embodiment, as shown in FIG. 4, the connecting part 1442 may extend perpendicularly or substantially perpendicularly from the seating part 1441 toward the case 110, and may be disposed above a top surface of the second case 112. The connecting part 1442 may be connected to the control module through a bolt, welding, and/or the like.

In an embodiment, the connecting portion 144 may further include the concave part 1443.

As shown in FIG. 4, the concave part 1443 may be formed to be concaved inwardly at opposite sides of the seating part 1441. The concave part 1443 may be disposed between the pair of stoppers 1122 when the battery pack bus bar 140 is engaged with the case 110. The stopper 1122 and the concave part 1443 may provide a reference point for engagement of the battery pack bus bar 140. Thus, when the battery pack bus bar 140 slides in a state of being engaged to the case 110, the battery pack bus bar 140 may be prevented or substantially prevented from moving excessively, as the stopper 1122 contacts the concave part 1443.

In an embodiment, the battery pack bus bar 140 may be disposed on the case 110, such that the contacting portion 141 may be positioned above the battery pack bus bar 140 (e.g., may form an upper part thereof), and the connecting portion 144 may be positioned under the battery pack bus bar 140 (e.g., may form a lower part thereof). In an embodiment, unlike the disposition illustrated in FIG. 2, the contacting portion 141 of the battery pack bus bar 140 may be disposed on the top surface of the second case 112 to contact the cell bus bar 130. The connecting portion 144 may be fixed on the bottom surface of the first case 111.

In an embodiment, the plurality of battery pack bus bars 140 may be provided. In an embodiment, one of the pair of battery pack bus bars 140 may be disposed at a side of the case 110 to contact the cell bus bar 130 connecting the negative tabs of the plurality of battery cells C to each other. The other battery pack bus bar 140 may be disposed at the opposite side of the case 110 to contact the cell bus bar 130 connecting the positive tabs of the plurality of battery cells C to each other.

In an embodiment, the pair of battery pack bus bars 140 may be disposed symmetrically or substantially symmetrically with respect to each other. In another embodiment, one of the pair of battery pack bus bars 140 may be disposed with the contacting portion 141 thereunder (e.g., forming a lower part thereof) and the other may be disposed with the contacting portion 141 thereon (e.g., forming an upper part thereof).

An operation of engaging the battery pack bus bar 140 to the case 110 according to an embodiment will be described in more detail with reference to FIGS. 13 through 15.

First, with reference to FIG. 13, the battery pack bus bar 140 may be positioned at a side of the case 110. In an embodiment the plurality of engaging protrusions 1401 may be positioned to correspond to the engaging grooves 1101. The concave parts 1443 may be positioned to correspond to the pair of stoppers 1122. In this state, the battery pack bus bar 140 may be moved toward the case 110.

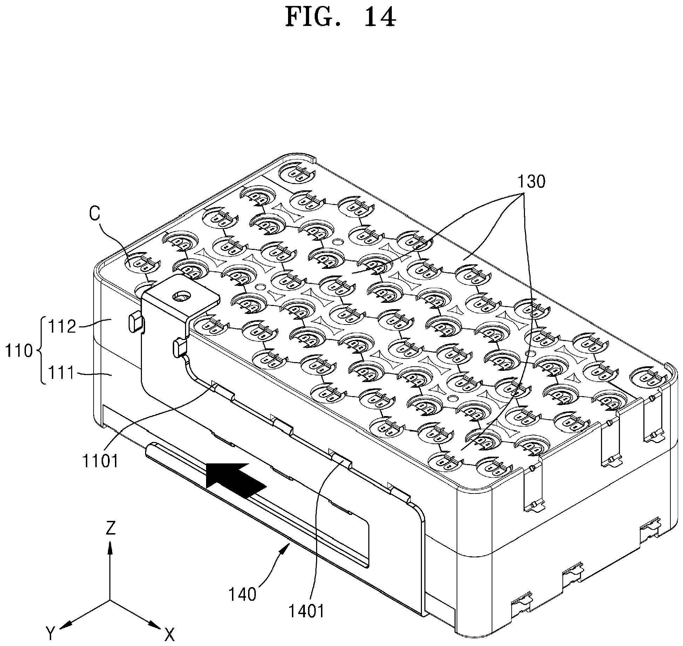

Referring to FIG. 14, the plurality of engaging protrusions 1401 may be inserted into the engaging grooves 1101 formed in the first case 111 and the second case 112, and the concave part 1443 may be positioned between the pair of stoppers 1122. Herein, the concave part 1443 located at a right side between the pair of concave parts 1443 may contact or be disposed adjacent to the stopper 1122 located at a right side between the pair of stoppers 1122. In this state, the battery pack bus bar 140 may slide in the longitudinal direction (the X-axis direction).

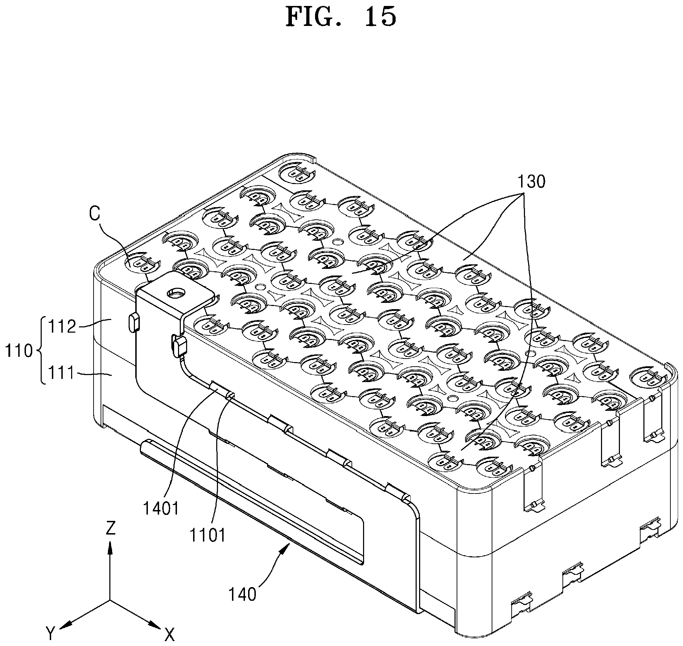

Referring to FIG. 15, the battery pack bus bar 140 may thus closely contact the left side. In this case, the projecting part 1401b of the engaging protrusion 1401 may contact the inner side of the second case 112 to prevent or substantially prevent the battery pack bus bar 140 from leaving the case 110 in a suitable direction (e.g., the Y-axis direction). The concave part 1443 located at the left side may contact the stopper 1122 located at the left side to prevent or substantially prevent the battery pack bus bar 140 from sliding excessively in a direction.

The foregoing is illustrative of some embodiments of the present disclosure, and is not to be construed as limiting thereof. Although some embodiments have been described, those skilled in the art will readily appreciate that various modifications are possible in the embodiments without departing from the scope of the present disclosure. It will be understood that descriptions of features or aspects within each embodiment should typically be considered as available for other similar features or aspects in other embodiments, unless otherwise described. Thus, as would be apparent to one of ordinary skill in the art, features, characteristics, and/or elements described in connection with a particular embodiment may be used singly or in combination with features, characteristics, and/or elements described in connection with other embodiments unless otherwise specifically indicated. Therefore, it is to be understood that the foregoing is illustrative of various example embodiments and is not to be construed as limited to the specific embodiments disclosed herein, and that various modifications to the disclosed embodiments, as well as other example embodiments, are intended to be included within the scope of the present disclosure as defined in the appended claims, and their equivalents.

The present invention can also be defined by reference to the following clauses:
Clause 1. A battery pack comprising:
   a case comprising a plurality of engaging grooves;
   a plurality of battery cells in the case;
   a plurality of cell bus bars electrically connecting the plurality of battery cells to each other; and
   one or more battery pack bus bars comprising a plurality of engaging protrusions configured to be inserted into the plurality of engaging grooves of the case,
   wherein the plurality of engaging protrusions are configured to be attached to or detached from the case by being inserted into or withdrawn from the engaging grooves.
Clause 2. The battery pack of clause 1, wherein each of the plurality of engaging protrusions protrudes in a direction crossing a longitudinal direction of the battery pack bus bar toward the case.
Clause 3. The battery pack of clause 1 or clause 2, wherein each of the plurality of engaging protrusions is configured to be inserted between two corresponding adjacent battery cells of the plurality of battery cells.
Clause 4. The battery pack of any one of clauses 1 to 3, wherein each of the plurality of engaging protrusions comprises:
   a bent part bent toward the case from the battery pack bus bar; and
   a projecting part extending from the bent part, and configured to be inserted into a corresponding engaging groove from among the plurality of engaging grooves.
Clause 5. The battery pack of clause 4, wherein a width of the projecting part is greater than a width of the bent part.
Clause 6. The battery pack of clause 4 or clause 5, wherein a width of the corresponding engaging groove is greater than or equal to a width of the projecting part.
Clause 7. The battery pack of any one of clauses 1 to 6, wherein each of the one or more battery pack bus bars comprises:
   a contacting portion configured to contact at least one of the plurality of cell bus bars; and
   an engaging portion extending in parallel to the contacting portion, and comprising the plurality of engaging protrusions.
Clause 8. The battery pack of clause 7, wherein the plurality of engaging protrusions are located along a longitudinal direction of the engaging portion, and
   wherein the plurality of engaging grooves has the same number as that of the plurality of engaging protrusions.
Clause 9. The battery pack of clause 8, wherein the plurality of engaging protrusions are located at an upper end of the engaging portion and a lower end of the engaging portion.
Clause 10. The battery pack of clause 9, wherein the plurality of engaging protrusions located at the lower end of the engaging portion are symmetrically located with respect to the plurality of engaging protrusions located at the upper end of the engaging portion around the engaging portion.
Clause 11. The battery pack of clause 9, wherein the plurality of engaging protrusions located at the lower end of the engaging portion are located between two adjacent engaging protrusions from among the plurality of engaging protrusions located at the upper end of the engaging portion.
Clause 12. The battery pack of any one of clauses 7 to 11, wherein the contacting portion is configured to contact a cell bus bar located at an edge of the case from among the plurality of cell bus bars.
Clause 13. The battery pack of any one of clauses 7 to 12, wherein the contacting portion has a bent shape comprising:
   a part configured to contact a bottom surface or a top surface of the case; and
   another part configured to contact a side surface adjacent to the bottom surface or the top surface of the case.
Clause 14. The battery pack of any one of clauses 7 to 13, wherein the contacting portion comprises at least a portion configured to contact the at least one of the plurality of cell bus bars.
Clause 15. The battery pack of any one of clauses 7 to 14, wherein each of the one or more battery pack bus bars further comprises:
   an extending portion extending upwardly from an end of the contacting portion; and
   a connecting portion extending upwardly from an end of the engaging portion opposite to the extending portion, and configured to be connected to a controller.
Clause 16. The battery pack of clause 15, wherein at least one of the plurality of engaging protrusions is located at an upper end of the extending portion.
Clause 17. The battery pack of clause 15 or clause 16, wherein the contacting portion and the engaging portion extend from opposite ends in a longitudinal direction of the extending portion, and are spaced apart from each other in a height direction, and
wherein at least a part of the at least one of the plurality of cell bus bars contacting the contacting portion is located in a region between the contacting portion and the engaging portion.
Clause 18. The battery pack of any one of clauses 15 to 17, wherein the case comprises:
   a first case; and
   a second case on the first case, the second case being configured to be attached to or detached from the first case, and comprising one or more stoppers on a side surface of the second case configured to receive the extending portion inserted therebetween.
Clause 19. The battery pack of clause 18, wherein the one or more stoppers comprise a pair of stoppers located at opposite sides of the extending portion in a width direction, and
   wherein the extending portion comprises a concave part adjacent to the pair of stoppers that is concaved inwardly.
Clause 20. The battery pack of clause 18 or clause 19, wherein the extending portion comprises:
   a seating part located between a pair of the one or more stoppers; and
   a connecting part extending from an end of the seating part and connected to the controller.
Clause 21. The battery pack of any one of clauses 1 to 20, wherein the one or more battery pack bus bars are configured to slide in a direction parallel to a longitudinal direction of the case in a state in which the plurality of engaging protrusions are inserted into the plurality of engaging grooves to closely contact a side surface of the case.
Clause 22. The battery pack of any one of clauses 1 to 21, wherein the one or more battery pack bus bars are located on a side surface corresponding to a long side of the case.

Clause 23. The battery pack of any one of clauses 1 to 22, wherein:
the one or more battery pack bus bars comprise a pair of battery pack bus bars;
one of the pair of battery pack bus bars is configured to interconnect negative tabs of the plurality of battery cells to each other; and
the other of the pair of battery pack bus bars is configured to interconnect positive tabs of the plurality of battery cells to each other.

## Claims

1. A battery pack comprising:
a case comprising a plurality of engaging grooves;
a plurality of battery cells in the case;
a plurality of cell bus bars electrically connecting the plurality of battery cells to each other; and
one or more battery pack bus bars comprising a plurality of engaging protrusions configured to be inserted into the plurality of engaging grooves of the case,
wherein the plurality of engaging protrusions are configured to be attached to or detached from the case by being inserted into or withdrawn from the engaging grooves.

2. The battery pack of claim 1, wherein each of the plurality of engaging protrusions protrudes in a direction crossing a longitudinal direction of the battery pack bus bar toward the case.

3. The battery pack of claim 1 or claim 2, wherein each of the plurality of engaging protrusions is configured to be inserted between two corresponding adjacent battery cells of the plurality of battery cells.

4. The battery pack of any one of claims 1 to 3, wherein each of the plurality of engaging protrusions comprises:
a bent part bent toward the case from the battery pack bus bar; and
a projecting part extending from the bent part, and configured to be inserted into a corresponding engaging groove from among the plurality of engaging grooves.

5. The battery pack of claim 4, wherein:
(i) a width of the projecting part is greater than a width of the bent part; and/or
(ii) a width of the corresponding engaging groove is greater than or equal to a width of the projecting part.

6. The battery pack of any one of claims 1 to 5, wherein each of the one or more battery pack bus bars comprises:
a contacting portion configured to contact at least one of the plurality of cell bus bars; and
an engaging portion extending in parallel to the contacting portion, and comprising the plurality of engaging protrusions.

7. The battery pack of claim 6, wherein the plurality of engaging protrusions are located along a longitudinal direction of the engaging portion, and
wherein the plurality of engaging grooves has the same number as that of the plurality of engaging protrusions.

8. The battery pack of claim 7, wherein the plurality of engaging protrusions are located at an upper end of the engaging portion and a lower end of the engaging portion.

9. The battery pack of claim 8, wherein:
(i) the plurality of engaging protrusions located at the lower end of the engaging portion are symmetrically located with respect to the plurality of engaging protrusions located at the upper end of the engaging portion around the engaging portion; or
(ii) the plurality of engaging protrusions located at the lower end of the engaging portion are located between two adjacent engaging protrusions from among the plurality of engaging protrusions located at the upper end of the engaging portion.

10. The battery pack of any one of claims 6 to 9, wherein:
(i) the contacting portion is configured to contact a cell bus bar located at an edge of the case from among the plurality of cell bus bars; and/or
(ii) the contacting portion has a bent shape comprising:
a part configured to contact a bottom surface or a top surface of the case; and
another part configured to contact a side surface adjacent to the bottom surface or the top surface of the case; and/or
(iii) the contacting portion comprises at least a portion configured to contact the at least one of the plurality of cell bus bars.

11. The battery pack of any one of claims 6 to 10, wherein each of the one or more battery pack bus bars further comprises:
an extending portion extending upwardly from an end of the contacting portion; and
a connecting portion extending upwardly from an end of the engaging portion opposite to the extending portion, and configured to be connected to a controller.

12. The battery pack of claim 11, wherein:
(i) at least one of the plurality of engaging protrusions is located at an upper end of the extending portion; and/or
(ii) the contacting portion and the engaging portion extend from opposite ends in a longitudinal direction of the extending portion, and are spaced apart from each other in a height direction, and
wherein at least a part of the at least one of the plurality of cell bus bars contacting the contacting portion is located in a region between the contacting portion and the engaging portion.

13. The battery pack of claim 11 or claim 12, wherein the case comprises:
a first case; and
a second case on the first case, the second case being configured to be attached to or detached from the first case, and comprising one or more stoppers on a side surface of the second case configured to receive the extending portion inserted therebetween.

14. The battery pack of claim 13, wherein:
(i) the one or more stoppers comprise a pair of stoppers located at opposite sides of the extending portion in a width direction, and
wherein the extending portion comprises a concave part adjacent to the pair of stoppers that is concaved inwardly; and/or
(ii) the extending portion comprises:
a seating part located between a pair of the one or more stoppers; and
a connecting part extending from an end of the seating part and connected to the controller.

15. The battery pack of any one of claims 1 to 14, wherein:
(i) the one or more battery pack bus bars are configured to slide in a direction parallel to a longitudinal direction of the case in a state in which the plurality of engaging protrusions are inserted into the plurality of engaging grooves to closely contact a side surface of the case; and/or
(ii) the one or more battery pack bus bars are located on a side surface corresponding to a long side of the case; and/or
(iii) the one or more battery pack bus bars comprise a pair of battery pack bus bars;
one of the pair of battery pack bus bars is configured to interconnect negative tabs of the plurality of battery cells to each other; and
the other of the pair of battery pack bus bars is configured to interconnect positive tabs of the plurality of battery cells to each other.
